(19) Europäisches Patentamt
European Patent Office
Office européen des brevets

(11) **EP 1 687 183 B1**

(12) **EUROPÄISCHE PATENTSCHRIFT**

(45) Veröffentlichungstag und Bekanntmachung des Hinweises auf die Patenterteilung:
**25.06.2008 Patentblatt 2008/26**

(21) Anmeldenummer: **04798200.4**

(22) Anmeldetag: **12.11.2004**

(51) Int Cl.:
**B60W 30/08** *(2006.01)*   *B60W 10/18* *(2006.01)*
**B60W 10/20** *(2006.01)*

(86) Internationale Anmeldenummer:
**PCT/EP2004/052946**

(87) Internationale Veröffentlichungsnummer:
**WO 2005/047066 (26.05.2005 Gazette 2005/21)**

(54) **VERFAHREN UND EINRICHTUNG ZUR VERRINGERUNG VON UNFALLSCHÄDEN**

METHOD AND DEVICE FOR REDUCING DAMAGE CAUSED BY AN ACCIDENT

PROCEDE ET DISPOSITIF POUR DIMINUER LES DOMMAGES PROVOQUES PAR DES ACCIDENTS

(84) Benannte Vertragsstaaten:
**DE FR HU IT**

(30) Priorität: **14.11.2003 DE 10353549**

(43) Veröffentlichungstag der Anmeldung:
**09.08.2006 Patentblatt 2006/32**

(73) Patentinhaber: **Continental Teves AG & Co. oHG**
**60488 Frankfurt am Main (DE)**

(72) Erfinder:
• **DIEBOLD, Jürgen**
**65760 Eschborn (DE)**
• **KLUG, Michael**
**63225 Langen (DE)**

(56) Entgegenhaltungen:
EP-A- 0 967 121          DE-A1- 10 102 772
DE-A1- 10 108 879          DE-A1- 10 231 556

• **PATENT ABSTRACTS OF JAPAN Bd. 2000, Nr. 13, 5. Februar 2001 (2001-02-05) & JP 2000 289634 A (KOYO SEIKO CO LTD), 17. Oktober 2000 (2000-10-17)**
• **PATENT ABSTRACTS OF JAPAN Bd. 2000, Nr. 08, 6. Oktober 2000 (2000-10-06) & JP 2000 142321 A (FUJITSU TEN LTD), 23. Mai 2000 (2000-05-23)**

**Beschreibung**

Die Erfindung betrifft ein Verfahren und eine Einrichtung zur Verringerung von Unfallschäden nach einem Erst-Unfall nach dem Oberbegriff des Anspruchs 1 oder des Anspruchs 8, bei denen insbesondere ein Fahrzeugführer keine Möglichkeiten hat, ein verunfalltes Fahrzeug in eine sichere Position zu überführen.

Bisherige Systeme der aktiven und passiven Sicherheit zielen auf einen Erst-Unfall ab. Während der Entwicklung des Erst-unfalls hat der Fahrer in der Regel die volle Kontrolle über das Fahrzeug. Er kann somit das Verhalten des Fahrzeuges aktiv beeinflussen.

Um Erst-Unfälle zu vermeiden, sind dabei Einrichtungen in die Fahrzeuge integriert worden, die Fahrzeuginstabilitäten selbsttätig entgegenwirken. Die Einrichtungen bestehen aus einer Vielzahl von Fahrstabilitätsregelungen. Unter dem Begriff Fahrstabilitätsregelung vereinigen sich fünf Prinzipien zur Beeinflussung des Fahrverhaltens eines Fahrzeugs mittels vorgebbarer Drücke bzw. Bremskräfte in oder an einzelnen Radbremsen und mittels Eingriff in das Motormanagement des Antriebsmotors. Dabei handelt es sich um Bremsschlupfregelung (ABS), welche während eines Bremsvorgangs das Blockieren einzelner Räder verhindern soll, um Antriebsschlupfregelung (ASR), welche das Durchdrehen der angetriebenen Räder verhindert, um elektronische Bremskraftverteilung (EBV), welche das Verhältnis der Bremskräfte zwischen Vorder- und Hinterachse des Fahrzeugs regelt, um Kippregelung (ARP), die ein Kippen des Fahrzeugs um seine Längsachse verhindert, sowie um eine Giermomentregelung (ESP), welche für stabile Fahrzustände beim Gieren des Fahrzeugs um die Hochachse sorgt.

Mit Fahrzeug ist in diesem Zusammenhang ein Kraftfahrzeug mit vier Rädern gemeint, welches mit einer hydraulischen, elektro-hydraulischen oder elektro-mechanischen Bremsanlage ausgerüstet ist. In der hydraulischen Bremsanlage kann mittels eines pedalbetätigten Hauptzylinders vom Fahrer ein Bremsdruck aufgebaut werden, während die elektrohydraulischen und elektro-mechanischen Bremsanlagen eine vom sensierten Fahrerbremswunsch abhängige Bremskraft aufbauen. Im Folgenden wird auf eine hydraulische Bremsanlage bezug genommen. Jedes Rad besitzt eine Bremse, welcher jeweils ein Einlassventil und ein Auslassventil zugeordnet sind. Über die Einlassventile stehen die Radbremsen mit dem Hauptzylinder in Verbindung, während die Auslassventile zu einem drucklosen Behälter bzw. Niederdruckspeicher führen. Schließlich ist noch eine Hilfsdruckquelle vorhanden, welche auch unabhängig von der Stellung des Bremspedals einen Druck in den Radbremsen aufzubauen vermag. Die Einlass- und Auslassventile sind zur Druckregelung in den Radbremsen elektromagnetisch betätigbar.

Zur Erfassung von fahrdynamischen Zuständen sind vier Drehzahlsensoren, pro Rad einer, mindestens ein Giergeschwindigkeitsmesser, ein Querbeschleunigungsmesser, ggf. ein Längsbeschleunigungssensor und mindest ein Drucksensor für den vom Bremspedal erzeugten Bremsdruck vorhanden. Dabei kann der Drucksensor auch ersetzt sein durch einen Pedalweg- oder Pedalkraftmesser, falls die Hilfsdruckquelle derart angeordnet ist, dass ein vom Fahrer aufgebauter Bremsdruck von dem der Hilfsdruckquelle nicht unterscheidbar ist.

Mit einer Fahrstabilitätsregelung wird das Fahrverhalten eines Fahrzeugs derart beeinflusst, dass es für den Fahrer in kritischen Situationen besser beherrschbar wird. Eine kritische Situation ist hierbei ein instabiler Fahrzustand, in welchem im Extremfall das Fahrzeug den Vorgaben des Fahrers nicht folgt. Die Funktion der Fahrstabilitätsregelung besteht also darin, innerhalb der physikalischen Grenzen in derartigen Situationen dem Fahrzeug das vom Fahrer gewünschte Fahrzeugverhalten zu verleihen.

Während für die Bremsschlupfregelung, die Antriebsschlupfregelung und die elektronische Bremskraftverteilung in erster Linie der Längsschlupf der Reifen auf der Fahrbahn von Bedeutung ist, fließen in die Giermomentregelung (GMR) weitere Größen ein, beispielsweise die Gierwinkelgeschwindigkeit und die Schwimmwinkelgeschwindigkeit. Kippregelungen werten in der Regel Querbeschleunigungs- oder Wankgrößen aus (DE 196 32 943 A1).

Neben den Fahrstabilitätsregelungen werden zunehmend Assistenz- und Sicherheitssysteme in den Fahrzeugen vorgesehen, die ausgehend von einer Umfeldsensorik die Verkehrssituationen analysieren und in Abhängigkeit von dem ermittelten Umfeld die Fahrzeuggeschwindigkeit an die ermittelte Fahrsituation selbsttätig anpassen oder anhand eines ermittelten Gefahrenpotentials vorhergesagten Unfalls die aktiven Sicherheitssysteme auslösen.

In einer Reihe von Unfallszenarien kommt es aber nach einem ersten Unfall jedoch zu weiteren Folgeunfällen. Es geht also von dem bereits verunfallten Fahrzeug durch den weiteren, unkontrollierten Bewegungsablauf bis zum Stillstand sowohl für die Insassen als auch für andere Verkehrsteilnehmer eine hohe Gefahr aus. Diese Gefahr wird mit dem Stand der Technik nicht beherrscht. Hat der Fahrer nach dem Erst-Unfall die Kontrolle über sein Fahrzeug verloren, weil er das Bewusstsein verloren hat oder unter Schock steht, so ist er auch mit einem ESP nicht mehr in der Lage, sein Fahrzeug sicher zum Stillstand zu bringen oder um mögliche Hindernisse sicher zu steuern.

DE 101 08 879 A1, der die Merkmale des Oberbegriffs der Ansprüche 1 and 8 zeigt, sieht einen Crash-Sensor vor, der bei einem Unfall eine automatische Abbremsung vornimmt. Dadurch soll der oder die Insassen und andere am Unfallgescheben beteiligte Personen oder Objekte die negativen Folgen einer gegebenenfalls stattfindenden Sekundärkollision geschützt werden.

Weiterhin ist aus der EP-A-0967 121 ein Verfahren zur Minimierung von Unfallfolgen bekannt, wobei in einer unvermeidlichen Unfallsituation ein Abbremsen der einzelnen Räder und/oder eine Beeinflussung der Lenkung in der Weise vorgenommen wird, dass das Fahrzeug in eine die Unfallfolgen minimierende Lage gedreht wird.

Der Erfindung liegt daher die Aufgabe zugrunde, die Fahrzeugsysteme derart zu auszubilden, dass ein geeigneter Regeleingriff durchgeführt wird, bevor es bei einen verunfallten Fahrzeug zu Folgeunfällen kommt.

Diese Aufgabe wird gelöst in Verbindung mit den Merkmalen des Anspruchs 1.

Das Verfahren zur Verringerung von Unfallschäden nach einem Erst-Unfall zeichnet sich vorteilhaft durch die Schritte Ermitteln des Erst-Unfalls,

Erfassen und analysieren des Fahrzeug-Umfeldes,

Ermitteln des Bewegungsverhaltens des Fahrzeugs,

Vergleichen des analysierten Fahrzeug-Umfeldes mit dem Bewegungsverhalten des Fahrzeugs derart

dass die Trajektorie und die Geschwindigkeit des Fahrzeugs mit der Position und dem Abstand von Objekten in der Fahrzeugtrajektorie verglichen wird, und

Bestimmen des Eingriffs in die Bremsen und/oder in die Lenkung des Fahrzeugs in Abhängigkeit von dem Vergleichsergebnis aus.

Vorteilhaft ist, dass der Erst-Unfall mittels der Beschleunigungssensoren einer Fahrdynamikregelung, den Airbag-Beschleunigungsaufnehmern, der Airbagauslösung oder einer Gurtstrafferauslösung des Fahrzeugs ermittelt wird.

Das Fahrzeug-Umfeld wird dabei vorzugsweise mittels Radarsensoren und/oder Infrarotsensoren und/oder einer Kamera erfasst und in einer Einheit die Position und die Abmessungen von Objekten im Fahrzeug-Umfeld bestimmt.

Zur Ermittlung des Bewegungsverhaltens des Fahrzeugs erfolgt vorteilhaft mit den im oder am Fahrzeug bereits vorhandenen Fahrzeugsensoren.

Darüber hinaus ist ein Anzeige- und Betätigungselement vorgesehen, mittels denen ein bevorstehender Eingriff in die Bremsen und/oder die Lenkung dem Fahrer angezeigt werden kann, wobei der Eingriff durch eine Betätigung des Betätigungselements unterbunden wird.

Erfolgt nach einer vorgegebenen Zeitspanne keine Betätigung des Betätigungselements, wird der Eingriff selbsttätig ausgeführt.

Zur Warnung der beteiligten Verkehrsteilnehmer ist vorgesehen, dass vor dem Eingriff die optischen Signalgeber des Fahrzeugs selbsttätig ausgelöst werden.

Vorteilhaft ist eine Einrichtung zur Verringerung von Unfallschäden nach einem Erst-Unfall vorgesehen, die Ermittlungseinheiten zum Ermitteln des Erst-Unfalls,

Erfassungseinheiten zum Erfassen und analysieren des Fahrzeug-Umfeldes, zum Ermitteln des Bewegungsverhaltens des Fahrzeugs,

eine Einheit zum Vergleichen des analysierten Fahrzeug-Umfeldes mit dem Bewegungsverhalten des Fahrzeugs derart, dass die Trajektorie und die Geschwindigkeit des Fahrzeugs mit der Position und dem Abstand von Objekten in der Fahrzeugtrajektorie verglichen wird und Bestimmen des Eingriffs in die Bremsen und/oder in die Lenkung in Abhängigkeit von dem Vergleichsergebnis aufweist.

Die Einrichtung weist darüber hinaus vorteilhaft ein Betätigungselement auf, mittels dem der Fahrer den Eingriff in die Bremsen und/oder in die Lenkung unterbinden kann.

Das Verfahren zur Verringerung von Unfallschäden nach einem Erst-Unfall, bei denen ein Fahrzeugführer keine Möglichkeiten hat, ein verunfalltes Fahrzeug in eine sichere Position zu überführen sieht also vorteilhaft vor, dass eine Einrichtung bzw. ein System in geeigneter Weise in das Bewegungsverhalten des Fahrzeuges eingreift und es so beeinflusst, dass das Fahrzeug ohne Zutun des Fahrers (autonom) in eine sichere Position überführt wird.

Dadurch kann der Fahrer und weitere Insassen vorteilhaft vor aus Folgeunfällen resultierenden weiteren Verletzungen geschützt werden, wenn der Fahrer nach dem Erst-Unfall die Kontrolle über sein Fahrzeug verliert.

Das Verfahren setzt auf eine sinnvolle Wahl der Ausweichtrajektorie bis zum sicheren Stillstand durch Umfeldsensorik.

Ein einfaches Abbremsen des Fahrzeugs ohne Rücksicht auf die aktuelle Verkehrssituation würde dagegen die Gefahr weiterer Kollisionen eher noch erhöhen und nachfolgenden Verkehr gefährden.

Ein Ausführungsbeispiel der Erfindung ist in den Zeichnungen dargestellt und wird im folgenden näher beschrieben.

Es zeigen

Fig. 1    ein Fahrzeug mit den Komponenten einer Fahrdynamikregelung und einer Umfeldsensorik

Fig. 2    ein Ablaufschema des Verfahrens nach der Erfindung

Fig. 3    ein schematisches Blockschaltbild der Reglereinheit der Figur 1.

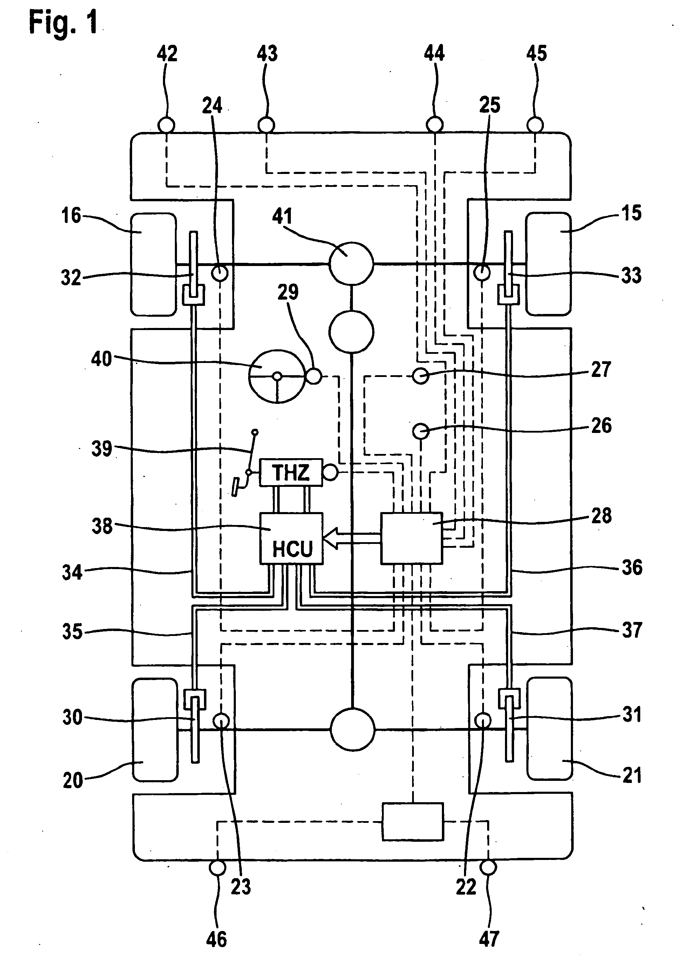

Figur 1 zeigt schematisch ein Fahrzeug mit einem Bremsregelungssystem. In der Figur 1 sind vier Räder 15, 16, 20, 21 gezeigt. An jedem der Räder 15, 16, 20, 21 ist je ein Radsensor 22 bis 25 vorgesehen. Die Signale werden einer elektronischen Regeleinheit 28 zugeführt, die anhand vorgegebener Kriterien aus den Raddrehzahlen die Fahrzeuggeschwindigkeit $v_{Ref}$ ermittelt. Weiterhin sind ein Gierratensensor 26, ein Querbeschleunigungssensor 27, ggf. ein Längsbeschleunigungssensor und ein Lenkwinkelsensor 29 mit der Regeleinheit 28 verbunden. Der Gierratensensor erfasst die Ist-Gierwinkelgeschwindigkeit des Fahrzeugs. Diese Ist-Gierwinkelgeschwindigkeit wird mit der in einem Fahrzeugmodell ermittelten Soll-Gierwinkelgeschwindigkeit verglichen. Bei Abweichungen zwischen der Ist- und Soll-Gierwinkelgeschwindigkeit prägt die Regeleinheit 28 dem Fahrzeug ein Moment auf, das die Ist-Gierwinkelgeschwindigkeit zu der Soll-Gierwinkelgeschwindigkeit führt. Die Regeleinheit 28 stellt hierzu in den Radbremsen den Bremsdruck individuell ein. In das Fahrzeugmodell geht im wesentlichen die von dem Lenkwinkelsensor 29 erfasste Größe des Lenkrads bzw. der Lenkwinkel der Räder ein. Über elektronisch oder mechanisch ansteuerbare Elemente 41 im Lenkstrang können auch die lenkbaren Räder 15, 16 ( z.B. bei Vorderradlenkung) in Abhängigkeit von den Gierwinkelsignalen oder von Signalen von Umfeldsensoren 42 bis 47 gesteuert werden. Umfeldsensoren erfassen das Umfeld des Fahrzeugs im Nah- und/oder Fernbereich mittels Radar- und/oder Infrarotstrahlen und/oder mittels optischer Elemente. Jedes Rad weist außerdem eine Radbremse 30 bis 33 auf. Diese Bremsen werden hydraulisch betrieben und empfangen unter Druck stehendes Hydraulikfluid über Hydraulikleitungen 34 bis 37. Der Bremsdruck wird über einen Ventilblock 38 eingestellt, wobei der Ventilblock von elektrischen Signalen fahrerunabhängig angesteuert wird, die in der elektronischen Regeleinheit 28 erzeugt werden. Über ein von einem Bremspedal betätigten Hauptzylinder kann von dem Fahrer Bremsdruck in die Hydraulikleitungen eingesteuert werden. In dem Hauptzylinder bzw. den Hydraulikleitungen sind Drucksensoren vorgesehen, mittels denen der Fahrerbremswunsch erfasst werden kann.

Geht man nun davon aus, dass ein Unfall stattgefunden hat und das Fahrzeug noch nicht zum Stillstand in einer sicheren Position gekommen ist, so geht von diesem Fahrzeug eine potentielle Gefährdung für die Insassen und das Umfeld aus.

Der Fahrer kann nun unter Umständen keinen hindernisfreien Fahrkurs mehr als Sollkurs am Lenkrad vorgeben und/oder das Fahrzeug bis zum Stillstand abbremsen.

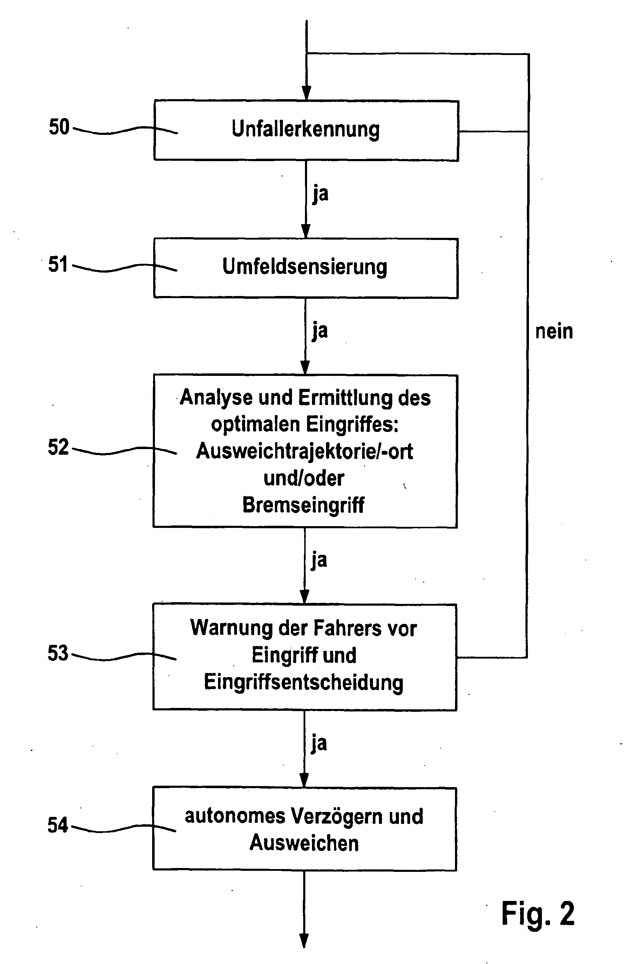

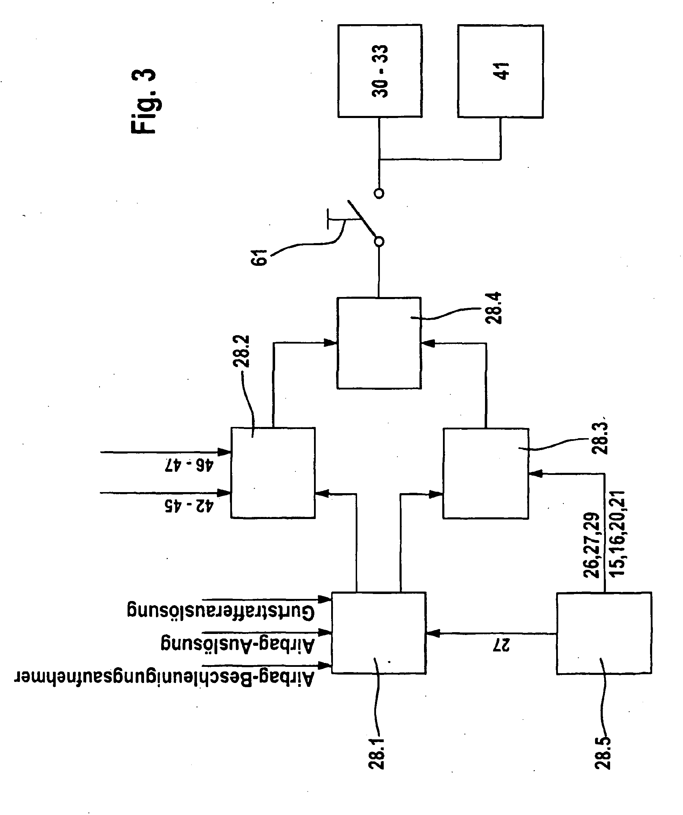

Figuren 2 und 3 zeigen ein Ablaufschema über das Verfahren zur Verhinderung von Folgeunfällen nach einem Erst-Unfall. Mit dem gezeigten Ablauf wird zunächst in Schritt 50 ein Erst-Unfall in der Ermittlungseinheit 28.1 erkannt erkannt. Dies kann z.B. aus den Beschleunigungssensoren 27 (Quer- und/oder Längsbeschleunigungssensoren) der Fahrdynamikregelung 28.5 (ESP), den Airbag-Beschleunigungsaufnehmern, der Airbagauslösung selbst oder einer Gurtstrafferauslösung abgeleitet werden.

Anschließend wird in Schritt 51 über die Umfeldsensorik (z.B. LIDAR, RADAR, Kamera oder vorteilhaft eine Kombination aus diesen Verfahren) in einer Logikeinheit 28.2 (Schritt 52) die Verkehrssituation analysiert. Dabei werden Hindernisse bzw. Objekte im Hinblick auf ihre Position zum Fahrzeug und ihre Abmessungen detektiert und vorteilhaft auch klassifiziert. Anhand des erkannten Umfelds kann in Abhängigkeit von dem in der Ermittlungseinheit 28.3 ermittelten Bewegungsverhalten des verunfallten Fahrzeugs, wie Geschwindigkeit, Fahrzeugtrajektorie, Gierverhalten u.dgl., in der Logikeinheit 28.4 der vorzunehmende Eingriff in das Fahrzeug ermittelt werden. Dabei können mindestens drei grundsätzliche Eingriffssituationen unterschieden werden, die auch in Kombination ausgeführt werden können:

a) autonomes Bremsen zur Fahrzeugverzögerung
b) autonomes Bremsen zum Einprägen eines Moments
c) autonomer Lenkeingriff

Autonomes Bremsen kann ausschließlich durchgeführt werden, wenn bei der Analyse der Verkehrssituation keine Objekte im Fahrzeugbereich ermittelt wurden. Dann kann das Fahrzeug mit angepasster Energie bis zum Stillstand verzögert werden.

Befinden sich Objekte in der Fahrzeugtrajektorie kann eine Trajektorie zum Ausweichen ermittelt werden, auf der das Fahrzeug autonom sicher in den Stillstand gebremst werden kann. Damit kann eine weitere Gefährdung der Insassen und der anderen Verkehrsteilnehmer reduziert werden. Das Ziel ist das unkontrollierte Fahrzeug möglichst schnell in den Stillstand zu verzögern, ohne weitere Kollisionen zu verursachen.

Vorteilhafterweise wird ein kombinierter Eingriff aus bremsen und lenken durchgeführt. Unter Bremsen wird dabei ein Eingriff in alle Räder 15,16,20,21 (Verzögern) oder in mindestens ein Rad (Einprägen eines Moments) mit gleichem oder unterschiedlichem Bremsdruck verstanden. Dabei ist zu berücksichtigen, dass zunächst die Geschwindigkeit reduziert wird, d.h. kinetische Energie aus dem Fahrzeug genommen wird. Erst wenn die Geschwindigkeit kleiner als eine definierte Schwelle ist, wird ein zusätzlicher Lenkeingriff vorgenommen. Voraussetzung ist, dass die Umfeldsensorik 42 bis 45 einen geeigneten sicheren Ort erkannt hat an dem das Fahrzeug sicher zum Stehen gebracht werden kann. Der Lenkeingriff darf maximal nur so groß sein, dass keine fahrdynamisch kritischen Zustände auftreten, d.h. eine Querbeschleunigung von ca. 0.4g darf nicht überschritten werden.

Diese Eingriffe sind natürlich nur unter ständiger Beobachtung des Umfeldes möglich. So muss beispielsweise auch auf der rückwärtigen Verkehr beachtet werden, wenn ein autonomer Notbremseingriff vorgenommen wird.

Besonders vorteilhaft ist ein Verfahren, das auf eine rückwärtsgerichtete Umfeldsensorik 46, 47 zurückgreifen kann. Damit ist es möglich den nachfolgenden Verkehr und/oder das rückliegende Umfeld in den autonomen Ausweich- und/oder Verzögerungsprozess einzubeziehen.

Dabei darf die Verzögerung des eigenen Fahrzeuges nicht größer als (1) sein.

$$(1) \quad a_E \le a_{\mu_{max}} + a_{rel0} - \frac{2\, s_{rel0}\, a_{rel0} - v_{rel0}^2}{2\left(s_{rel0} + v_{rel0}\, t_{reak}\right) + a_{rel0}\, t_{reak}^2}$$

mit:

$a_{\mu_{max}}$ : maximal physikalisch mögliche Verzögerung

$S_{rel0}$ : Abstand zum betrachteten Zeitpunkt

$V_{rel0}$ : relative Geschwindigkeit zum betrachteten Zeitpunkt

$a_{rel0}$ : relative Beschleunigung zum betrachteten Zeitpunkt

$t_{reak}$ : Reaktionszeit Fahrer

Vor dem autonomen Eingriff wird in Schritt 53 der Fahrer davon informiert bzw. gewarnt, so dass er über eine Bedieneinrichtung 61 das automatische Ausweichen und/oder Verzögern verhindern und selbst weiter die Kontrolle ausüben kann. Wird die Bedieneinrichtung von dem Fahrer betätigt, wird der Ablauf ab Schritt 50 aufs Neue durchfahren.

Wird ein Zeitlimit überschritten, so werden Fahrer und nachfolgender Verkehr z.B. durch Aktivieren der Warn- und/oder Bremsleuchten auf die Einleitung des Notmanövers hingewiesen und der Noteingriff (autonomes Verzögern und/oder Ausweichen)im Schritt 54 durchgeführt.

Besonders vorteilhaft ist, dass das System bei Fahrzeugen mit einer Hands-off Erkennung und Detektion on eines instabilen Fahrzustandes (z.B. weil der Fahrer das Bewusstsein verloren hat) ebenfalls aktiviert werden kann und ein autonomes Verzögern und/oder Ausweichen bis zum sicheren Stillstand eingeleitet wird.

## Patentansprüche

1. Verfahren zur Verringerung von Unfallschäden nach einem Erst-Unfall, mit dem Schritt
   Ermitteln des Erst-Unfalls,
   **gekennzeichnet durch** die weiteren Schritte
   Erfassen und analysieren des Fahrzeug-Umfeldes, Ermitteln des Bewegungsverhaltens des Fahrzeugs, Vergleichen des analysierten Fahrzeug-Umfeldes mit dem Bewegungsverhalten des Fahrzeugs derart
   dass die Trajektorie und die Geschwindigkeit des Fahrzeugs mit der Position und dem Abstand von Objekten in der Fahrzeugtrajektorie verglichen wird, und
   dass in Abhängigkeit von dem Vergleichsergebnis ein Eingriff in die Bremsen und/oder die Lenkung vorgenommen wird.

2. Verfahren nach Anspruch 1, **dadurch gekennzeichnet, dass** der Erst-Unfall mittels der Beschleunigungssensoren (27) einer Fahrdynamikregelung, den Airbag-Beschleunigungsaufnehmern, der Airbagauslösung oder einer Gurtstrafferauslösung des Fahrzeugs ermittelt wird.

3. Verfahren nach Anspruch 1 oder 2, **dadurch gekennzeichnet, dass** mittels Radarsensoren und/oder Infrarotsensoren und/oder einer Kamera (42 bis 47) das Fahrzeug-Umfeld erfasst und in einer Einheit (28) die Position und die Abmessungen von Objekten im Fahrzeug-Umfeld bestimmt werden.

4. Verfahren nach Anspruch 1 bis 3, **dadurch gekennzeichnet, dass** anhand der Fahrzeugsensoren (22 bis 25, 26, 27, 29) das Bewegungsverhalten des Fahrzugs ermittelt wird.

5. Verfahren nach Anspruch 1 bis 4, **dadurch gekennzeichnet, dass** ein Anzeige- und Betätigungselement vorgesehen ist, mittels denen ein bevorstehender Eingriff in die Bremsen und/oder die Lenkung dem Fahrer angezeigt wird, wobei der Eingriff durch eine Betätigung des Betätigungselements unterbunden wird.

6. Verfahren nach Anspruch 1 bis 5, **dadurch gekennzeichnet, dass** der Eingriff nach einer vorgegebenen Zeitspanne selbsttätig ausgeführt wird.

**7.** Verfahren nach Anspruch 1 bis 6, **dadurch gekennzeichnet, dass** vor dem Eingriff die optischen Signalgeber des Fahrzeugs selbsttätig ausgelöst werden.

**8.** Einrichtung zur Verringerung von Unfallschäden nach einem Erst-Unfall **gekennzeichnet durch** Ermittlungseinheiten (28.1) zum Ermitteln des Erst-Unfalls, Erfassungseinheiten (42 bis 47, 28.3) zum Erfassen und analysieren des Fahrzeug-Umfeldes, Ermittlungseinheiten (15, 16, 20, 21, 26, 29, 28.3) zum Ermitteln des Bewegungsverhaltens des Fahrzeugs, eine Einheit (28.4) zum Vergleichen des analysierten Fahrzeug-Umfeldes mit dem Bewegungsverhalten des Fahrzeugs derart, dass die Trajektorie und die Geschwindigkeit des Fahrzeugs mit der Position und dem Abstand von Objekten in der Fahrzeugtrajektorie verglichen wird und Bestimmen des Eingriffs in die Bremsen (30 bis 33) und/oder in die Lenkung (41) in Abhängigkeit von dem Vergleichsergebnis.

**9.** Einrichtung nach Anspruch 8, **gekennzeichnet durch** ein Betätigungselement (61), mittels dem der Fahrer den Eingriff in die Bremsen (30 bis 33) und/oder in die Lenkung (41) unterbinden kann.

**Claims**

**1.** Method for reducing accident damages after a primary accident, including the step of detecting the primary accident, **characterized by** the additional steps of sensing and analyzing the ambience of the vehicle, detecting the motional behavior of the vehicle, comparing the analyzed vehicle ambience with the motional behavior of the vehicle in such a fashion that the trajectory and the speed of the vehicle are compared with the position and the distance of objects in the vehicle trajectory, and in that intervention into the brakes and/or the steering system is carried out depending on the comparison result.

**2.** Method as claimed in claim 1, **characterized in that** the primary accident is detected by means of the acceleration sensors (27) of a driving dynamics control system, the airbag-acceleration sensors, the airbag activating system, or a seatbelt constraint activating system of the vehicle.

**3.** Method as claimed in claim 1 or 2, **characterized in that** the ambience of the vehicle is sensed by means of radar sensors and/or infrared sensors and/or a camera (42 to 47), and the position and the dimensions of objects in the vehicle ambience are determined in a unit (28).

**4.** Method as claimed in any one of claims 1 to 3, **characterized in that** the vehicle sensors (22 to 25, 26, 27, 29) are used to determine the motional behavior of the vehicle.

**5.** Method as claimed in any one of claims 1 to 4, **characterized in that** a display element and actuating element is provided, by means of which an imminent intervention into the brakes and/or the steering system is indicated to the driver, and the intervention is stopped by actuation of the actuating element.

**6.** Method as claimed in any one of claims 1 to 5, **characterized in that** the intervention is carried out automatically after a predetermined time interval.

**7.** Method as claimed in any one of claims 1 to 6, **characterized in that** the optical signal transmitters of the vehicle are automatically triggered prior to the intervention.

**8.** Device for reducing accident damages after a primary accident, **characterized by** detection units (28.1) for detecting the primary accident, sensing units (42 to 47, 28.3) for sensing and analyzing the ambience of the vehicle, detection units (15, 16, 20, 21, 26, 29, 28.3) for detecting the motional behavior of the vehicle, a unit (28.4) for comparing the analyzed vehicle ambience with the motional behavior of the vehicle in such a fashion that the trajectory and the speed of the vehicle are compared with the position and the distance of objects in the vehicle trajectory, and intervention into the brakes (30 to 33) and/or the steering system (41) is determined depending on the comparison result.

**9.** Device as claimed in claim 8,
**characterized by** an actuating element (61) enabling the driver to stop the intervention into the brakes (30 to 33) and/or into the steering system (41).

**Revendications**

**1.** Procédé pour réduire les dommages provoqués par accidents après un premier accident, comportant l'étape de détermination du premier accident,
**caractérisé par** les étapes complémentaires suivantes :

relevé et analyse de l'environnement du véhicule, détermination du comportement en mouvement du véhicule, comparaison de l'environnement du véhicule analysé, et du comportement en mouvement du véhicule de manière que la trajectoire et la vitesse du véhicule soient comparées à la position et à la distance d'objets dans la trajectoire du véhicule, et en ce qu'il est procédé à une intervention dans les freins et/ou la direction, en fonction du résultat de la comparaison.

**2.** Procédé selon la revendication 1, **caractérisé en ce que** le premier accident est déterminé au moyen des capteurs d'accélération (27) d'une régulation de la dynamique de conduite, des capteurs d'accélération de coussin gonflable, du déclenchement du coussin gonflable ou d'un déclenchement de tendeur de ceinture du véhicule.

**3.** Procédé selon la revendication 1 ou 2, **caractérisé en ce que** l'environnement du véhicule est relevé au moyen de capteurs radar et/ou de capteurs à infrarouge et/ou d'une caméra (42 à 47) et la position et les dimensions d'objets dans l'environnement du véhicule sont déterminées dans une unité (28).

**4.** Procédé selon la revendication 1 à 3, **caractérisé en ce que** le comportement en mouvement du véhicule est déterminé à l'aide des capteurs de véhicule (22 à 25, 26, 27, 29).

**5.** Procédé selon la revendication 1 à 4, **caractérisé en ce qu'**il est prévu un élément d'affichage et d'actionnement au moyen duquel une intervention imminente dans les freins et/ou la direction est indiquée au conducteur, l'intervention étant interdite par un actionnement de l'élément d'actionnement.

**6.** Procédé selon la revendication 1 à 5, **caractérisé en ce que** l'intervention est exécutée automatiquement après un intervalle de temps prédéfini.

**7.** Procédé selon la revendication 1 à 6, **caractérisé en ce que** les transmetteurs optiques de signaux du véhicule sont automatiquement déclenchés avant l'intervention.

**8.** Dispositif pour réduire les dommages provoqués par accidents après un premier accident, **caractérisé par**
des unités de détermination (28.1) pour déterminer le premier accident,
des unités de détection (42 à 47, 28.3) pour relever et analyser l'environnement du véhicule,
des unités de détermination (15, 16, 20, 21, 26, 29, 28.3) pour déterminer le comportement en mouvement du véhicule,
une unité (28.4) pour comparer l'environnement analysé du véhicule au comportement en mouvement du véhicule de manière que la trajectoire et la vitesse du véhicule soient comparées à la position et à la distance d'objets dans la trajectoire du véhicule, et
détermination de l'intervention dans les freins (30 à 33) et/ou dans la direction (41) en fonction du résultat de la comparaison.

**9.** Dispositif selon la revendication 8, **caractérisé par** un élément d'actionnement (61) au moyen duquel le conducteur peut interdire l'intervention dans les freins (30 à 33) et/ou dans la direction (41).

# Fig. 1

50 —⁓ **Unfallerkennung**

ja

51 —⁓ **Umfeldsensierung**

ja

52 —⁓ **Analyse und Ermittlung des optimalen Eingriffes: Ausweichtrajektorie/-ort und/oder Bremseingriff**

ja

53 —⁓ **Warnung der Fahrers vor Eingriff und Eingriffsentscheidung**

ja

54 —⁓ **autonomes Verzögern und Ausweichen**

nein

# Fig. 2

Fig. 3

**IN DER BESCHREIBUNG AUFGEFÜHRTE DOKUMENTE**

**In der Beschreibung aufgeführte Patentdokumente**

- DE 19632943 A1
- DE 10108879 A1

- EP 0967121 A